**Europäisches Patentamt**

**European Patent Office**

**Office européen des brevets**

(19)

(11) Publication number: **0 259 873**
**A2**

# EUROPEAN PATENT APPLICATION

(12)

(21) Application number: 87113237.9

(22) Date of filing: 10.09.87

(51) Int. Cl.4: **H01R 23/68** , G09F 7/06 , H05K 3/40

(30) Priority: 12.09.86 DK 4368/86

(43) Date of publication of application:
16.03.88 Bulletin 88/11

(84) Designated Contracting States:
AT BE CH DE ES FR GB GR IT LI LU NL SE

(71) Applicant: A/S MODULEX
Klovervej 101
DK-7190 Billund(DK)

(72) Inventor: Kortegaard, Per
Gravenstenvej 23
DK-9000 Aalborg(DK)

(74) Representative: Glaeser, Joachim, Dipl.-Ing.
Patentanwalt Königstrasse 28
D-2000 Hamburg 50(DE)

(54) **An electronic board, in particular a planning board.**

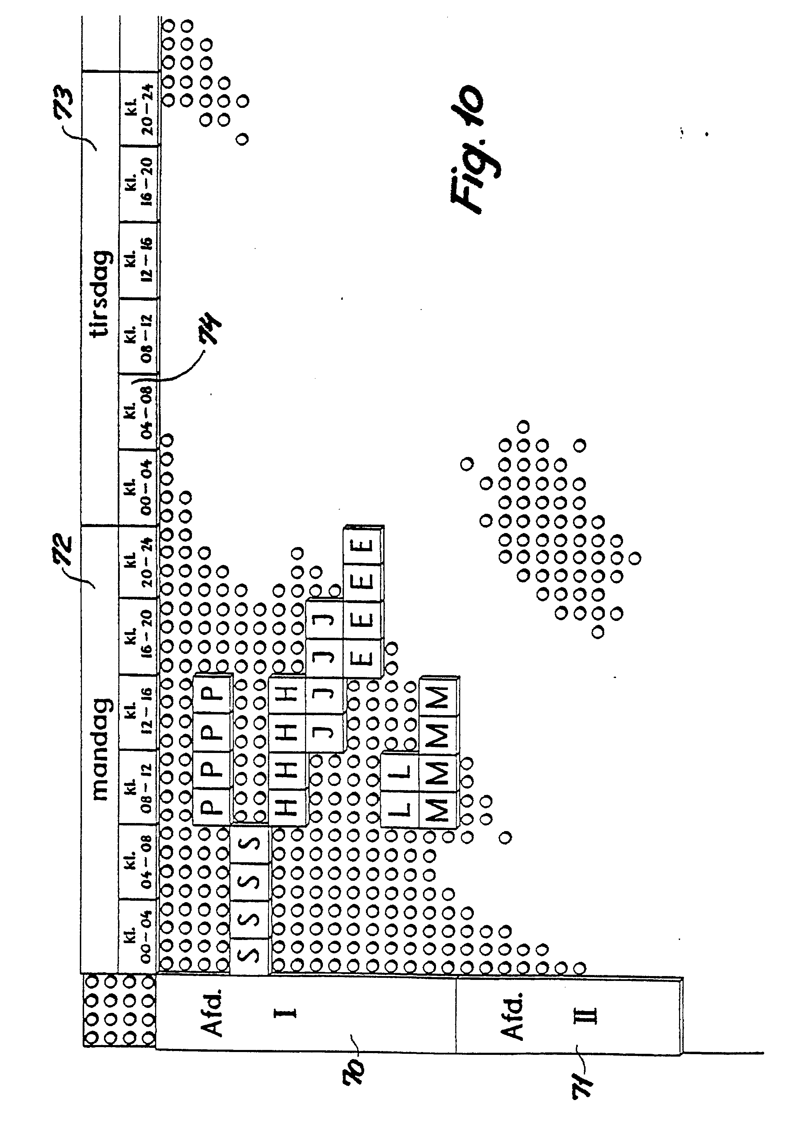

(57) An electronic board, e.g. a planning board, has a plurality of rows and columns of mechanical coupling means (see fig. 10) and electrically conducting contact areas, respectively, and moreover comprises a plurality of marking elements (70-74, P, S, H, J, E, L, M) adapted to be secured mechanically to the board in a large number of various positions and also adapted to provide electric contact between the electric identification circuits in the marking elements and a plurality of contact areas in the board, so that electric information may be transferred in both directions between the marking elements and the board. This entails that the electronic board enables visualization of data information in the form of a spatial position on the board as well as in the form of individual marking, and conversion of visual information of the latter type into data information signals. The electronic scanning of the board can be established rapidly in that a plurality of contact areas in the board, disposed in the same row and column, respectively, are interconnected to a respective terminal on an X and Y circuit, respectively.

Fig. 10

Xerox Copy Centre

# An electronic board, in particular a planning board.

The invention concerns an electronic board, e.g. a planning board, comprising a plurality of different marking elements adapted to be positioned on the board and comprising electric components which can be detected by detecting means, placed in the board, via cooperating contact areas on the board and the marking elements, respectively.

Thus, the invention concerns a board of a type which is related to a chess game known from the German Offenlegungsschrift 2 348 016. This prior art comprises Hall elements which are placed within each of the matrix points of the board so that a distinction may be made between a small number of different forms of bricks which are dissimilarly magnetised. The drawbacks of this prior art are high manufacturing price, that the bricks are to be positioned very carefully and that magnetic respect distances are to be considered. The invention is also related to the chess game known from the US Patent Specification 4 391 447, in which a plurality of electric connections may be established between a brick and a circuit associated with each field, each arranged in accordance with the rules of the chess game and connected to circuits associated with all the fields. The usefulness of this art is limited to the relatively small number of fields in a chess game.

The object of the invention is to provide an electronic board which permits a distinction to be made between a very large number of marking elements, and the position of these to be determined very rapidly among a very large number (several orders greater than in the said chess games) of possible positions. This creates a basis for a completely new tool for planning purposes, the electronic board providing for visualization of data information in the form of spatial position of the marking elements on the board as well as in the form of individual marking of the elements, and so that visual information of the latter nature can rapidly be converted into data information signals.

This object is achieved in that the board is constructed as stated in the characterizing portion of claim 1, so that the marking elements may be relatively small and be placed in a very large number of different positions on the board and comprise almost arbitrarily many different identification codes. A high scanning rate for the detection of the many possible positions on the board is achieved in combination with said X-Y circuit.

As stated in claim 2, the electrically conducting contact areas are preferably constructed in connection with mechanical coupling studs, where, depending upon the size of the coupling stud, one or more mutually insulated contact areas per coupling stud may be provided. Planning boards having the mechanical structure stated in claim 2 are known, but when it has so far been unknown to provide such a board with the electric means mentioned in claim 1, the reason is probably that skilled persons would consider it expensive to produce partly the board with the many incorporated electric conductors and partly the marking elements at a sufficiently low price. It will later be explained briefly how these problems can be solved, and reference is also made to the Danish Patent Applications Nos. 4369/86 and 4370/86, which describe in more detail a technique for producing the electric conductors in the board and identification circuit for the marking element, respectively.

Thus, it is possible to mass-produce a board which not only contains a matrix of electric conductors for data inputs and outputs, respectively, but also contains lines for feeding power supply to the marking elements. Then the marking elements can also comprise the means defined in claim 3, which may e.g. be a liquid crystal display.

It is expedient that a user can change the meaning of a marking element, which can be provided for by means of the features defined in claim 4, which can typically represent an on/off function, e.g. in the form of a switch on the marking element or an electric plug for connecting the marking element to a remote control. Owing to the visual display of the information and the features in the preceeding claims, it is expedient that certain marking elements are greater than a smallest base element, and it is therefore advantageous that the identification code comprises information on the size of the marking element, as stated in claim 5, so that the X and Y circuits can in advance skip the matrix points which are covered by a larger marking element.

Preferably, the board is composed of a plurality of adjacent board units, as stated in claim 6, which results in a more flexible system while allowing for the mutual thermal movement of insulating plastics and electrically conducting metal. To facilitate a survey, the board can advantageously be preprinted as stated in claim 7, and for quite special purposes it may be expedient to use the sheet mentioned in claim 8.

Claim 9 defines details of the preferred electric means in connection with the board, so that the position and identification of the marking elements may be determined by scanning all the matrix points of the board. Preferably, the board control circuit is constructed as interface circuits for a data processing system.

The features defined in claim 10 offer the advantage that in the subsequent scanning process it is sufficient to identify such marking elements as have changed position with respect to the earlier scanning, it being presupposed that the presence of a marking element in a position occupied by the preceding scanning cycle involves unchanged identification code. It will be appreciated that the latter feature cannot be utilized in connection with a marking element of the type defined in claim 4 or in connection with coupling of several marking elements on top of each other, as will be explained later.

The invention will be explained more fully by the following description of some embodiments with reference to the drawing, in which

fig. 1 schematically shows the starting situation of the invention,

fig. 2. schematically shows components of a board according to the invention,

figs. 3 and 4 show details in the board of fig. 2,

fig. 5. shows an embodiment of a marking element according to the invention,

fig. 6. shows an example of the arrangement of a simple electric circuit in a marking element,

fig. 7. is a very simplified view of an electric matrix for the board according to the invention,

fig. 8. shows a more complicated circuit for a marking element,

fig. 9. shows in more detail how the electric matrix and the associated control circuits may be arranged, while

figs. 10-12 show three different examples of the use and the arrangement of the electronic board according to the invention.

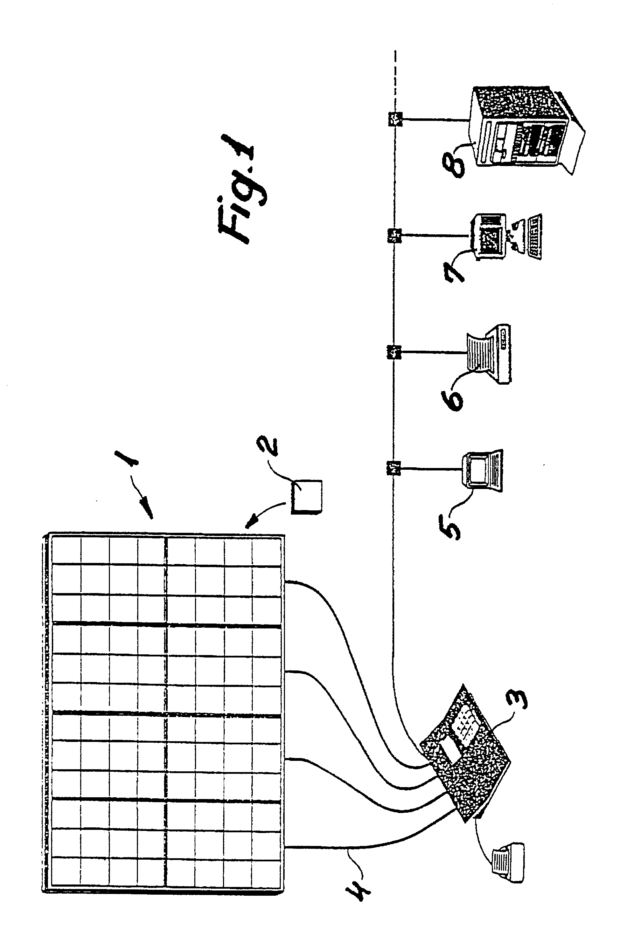

With reference to figs. 1-8, the components included in a preferred embodiment of the invention will be briefly explained first. This explanation will also include a mention of a preferred embodiment of the inventions disclosed in the said Danish patent applications which are mentioned in the preamble.

Fig. 1 shows a board 1 on which a plurality of marking elements 2 may be placed in a plurality of different positions. Through means incorporated in the board, a circuit 3 can detect partly the position and partly the type of the identification elements, cf. the mentioned German Offenlegungsschrift and US Patent Specification. However, the board of the invention provides a significant increase in the number of different positions and different types of marking elements, so that large information amounts can be exchanged via the lines 4.

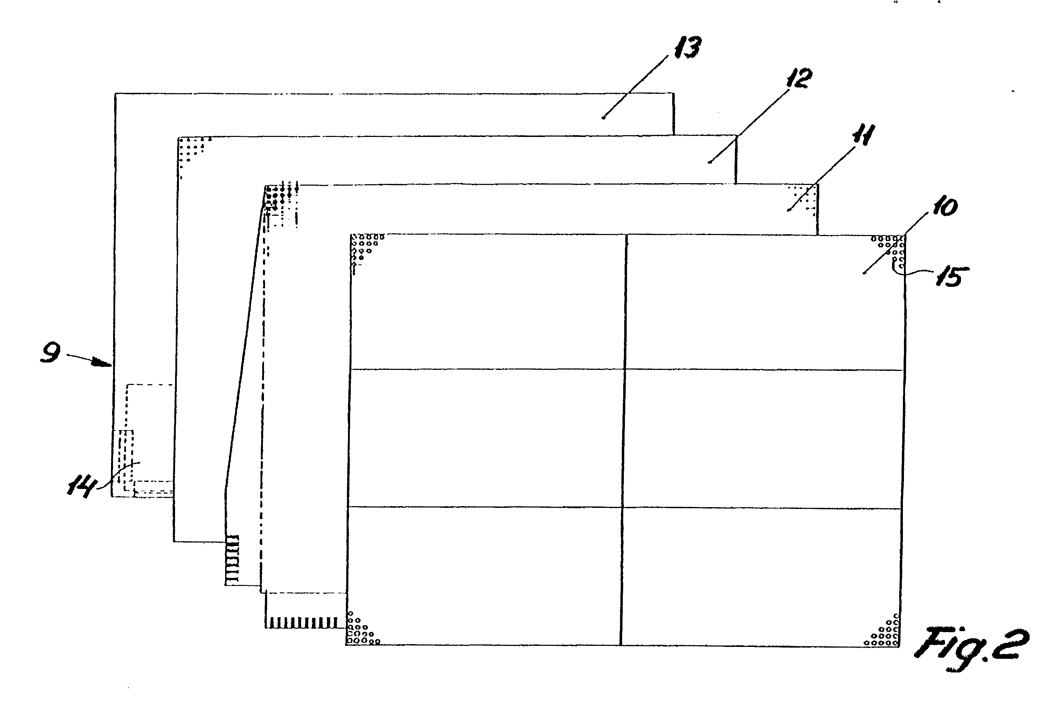

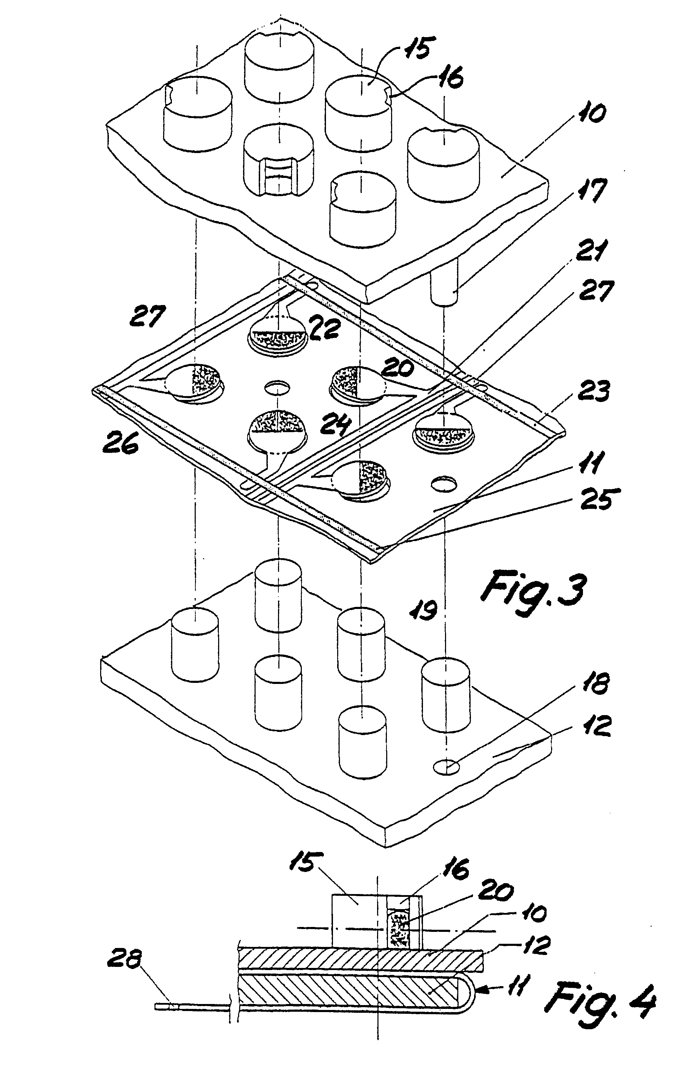

Fig. 2 shows an embodiment of a board unit 9, the division of the board 1 shown in fig. 1 indicating that the board may consist of eight units of the type shown in fig. 2. Each board unit comprises a front plate 10 provided with a modular pattern of coupling studs 15, a so-called flexprint 11, a rear plate 12 and a plate 13 for suspension of the board and for reception of a control circuit in the cavity indicated at 14. The plates 10-12 are arranged and assembled as appears from figs. 3 and 4.

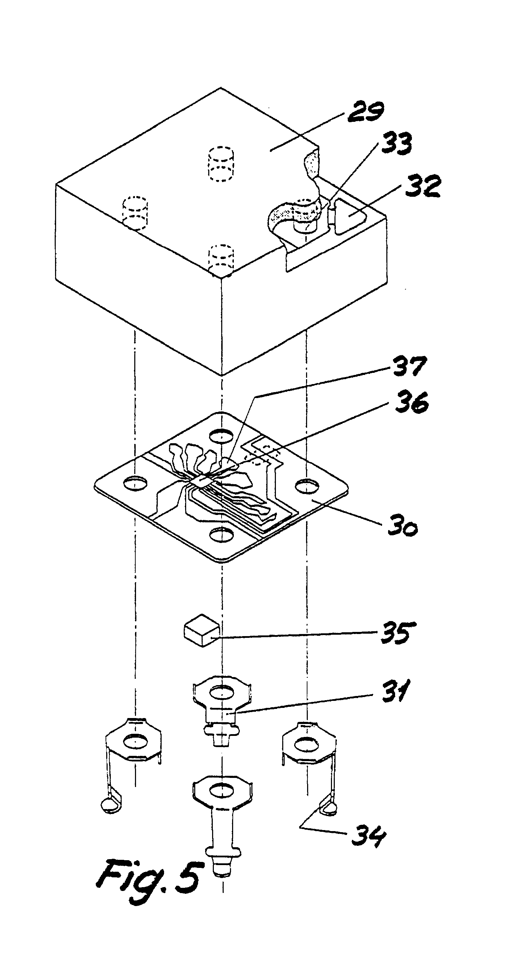

As mentioned, the plate 10 has a plurality of coupling studs disposed with a mutual modular distance and adapted to be received in a cavity in the underside of a marking element (fig. 5). The coupling studs 15 are hollow and are open downwardly and laterally via a cut 16 extending in the full height of the coupling stud and over a fraction of its arc length. The underside of the plate 10 is provided with a plurality of guide pins 17 adapted to be received in guide holes 18 in the plate 12. The guide pins 17 are slightly longer than locking pins 19 on the plate 12, so that the guide pins ensure that the locking pins 19 hit the cavities in the coupling studs 15 exactly when the plate parts 10 and 12 are assembled around the flexprint 11.

The flexprint 11 comprises a flexible layer of electrically insulating material on which a plurality of electric conductors is applied by a technique known per se. The electrically conducting areas comprise partially punched flaps 20 flush with an associated coupling stud 15, and it will thus be appreciated that e.g. the flap 20 is pressed up into the cavity of the coupling stud 15 by means of the locking pin 19, so that the flap 20 is curved to firm engagement with the cylindrical surface of the coupling stud 19, thus providing electric contact via the cut 16 with the conductor or conductors in the flexprint 11 which are elctrically connected to the flap 20. The other flaps are arranged similarly, and it can be seen in the embodiment shown that the cuts 16 are disposed in four mutually different angular sections, corresponding to four mutually insulated power paths in the flexprint, each of said power paths connecting all flaps which are positioned in uniform angular sectors in the coupling studs. For example, the flap 20 may be contiguous with an electric conductor 21, while the flap 22 is contiguous with an electric conductor 23, the latter conductors constituting X and Y data lines, respectively. The flap 24 may be connected to the electric conductor 25, while the flap 26 may be connected to a conductor 27 for feeding power supply to the marking elements. The flexprint may be produced by ordinary, known printed circuit techniques and by punching.

With reference to fig. 4, which shows a section through the mutually mounted plates from fig. 3, it will be seen how the flap 20 is accessible through the cut 16 for provision of electric contact with the X data conductor in the flexprint. Another expedient detail in the flexprint 11 appears from fig. 4, as the flexprint 11 is bent along a section of the edge and has mutually isolated, electrically conducting areas which can readily be caused to cooperate with a terminal plug e.g. at 28 (compare also with the left corner at the bottom of the flexprint 11 from fig. 2).

Fig. 5 shows details of a preferred embodiment of a marking element of the invention. For clarity, this marking element is not provided with visual texts or signs on the surface, as has been done in figs. 10-12. The marking element comprises a housing 29 with a downwardly open cavity to receive a circuit 30 and to receive four adjacent studs 15 from fig. 3, so that the housing 29 may be attached mechanically on the board. To provide electric contact between the circuit 30 and the flaps 20, 22, 24 and 26 shown in fig. 3, the housing in fig. 5 has four electrically conducting legs 31 which are mechanically guided in a cavity 32 and an attachment pin 33, and which are electrically connected to a conductor on the circuit 30. The contact face 34 of each leg can provide resilient contact with a flap from the flexprint via an associated cut 16. It will be appreciated that the shown arrangement entails that the mutual distance between two different positions of a marking element corresponds to twice the modular distance between the coupling studs 15. In other embodiments, comprising e.g. four mutually insulated flaps per coupling stud, the mutual distance between two positions corresponds to said modular distance.

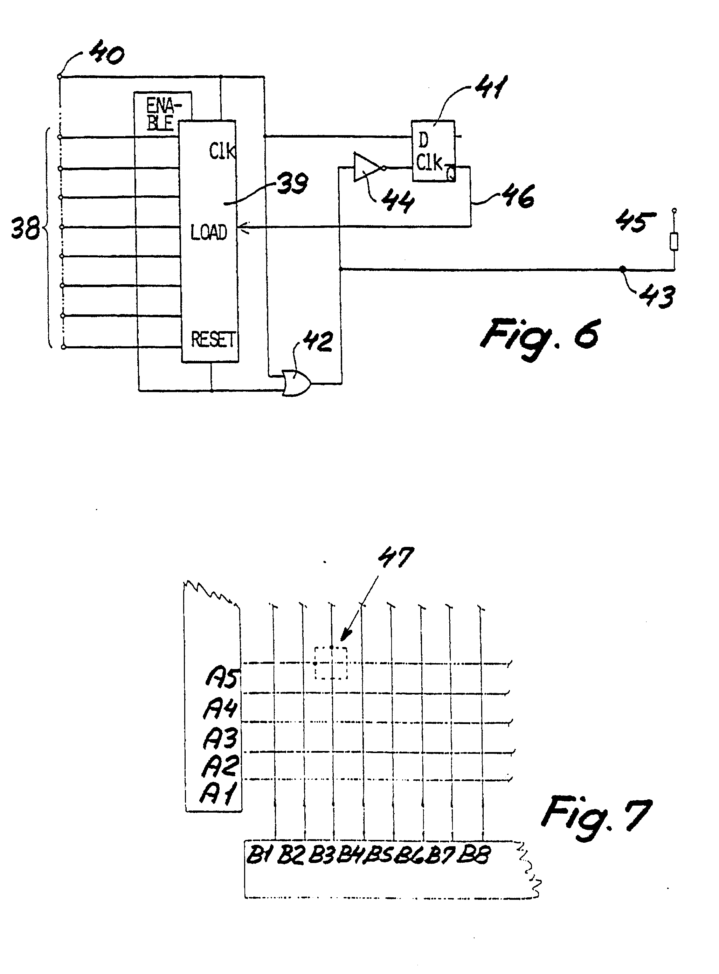

The print board 30 may be adapted to receive an integrated circuit 35 at the location indicated at 36, so that power supply is fed via the contact legs to the circuit 35, which contains at least an identification circuit e.g of the type shown in fig. 6. The latter circuit contains an identification code which may be set beforehand, e.g. by breaking some of the program paths indicated at 37 in the circuit 30.

Fig. 6 shows a very simple and thus inexpensive identification circuit for the marking element. The circuit comprises some inputs 38 which are hard wired as explained in connection with the program paths 37 from fig. 5, and which thus define an identification code for a combined counter and comparator circuit 39. The latter circuit receives input signals via a terminal 40, which is moreover connected to a D type multivibrator 41 and an OR gate 42, whose open collector output is connected partly to an output terminal 43 and partly to the multivibrator 41 via an inverter 44.

In short, the circuit may serve as an identification circuit in that the input terminal 40 is kept at a high level (which entails that the open collector output of the OR gate 42 is three stated, i.e. is kept at a high level by means of a resistor 45), and using the output terminal 43 as an input terminal for a brief switch from high to low signal level the multivibrator 41 can be triggered to produce a load signal on the $\bar{Q}$ -output to the line 46. The load signal entails that the counter starts counting the number of signals on the input terminal 40, and as long as the count does not correspond to the identification code, the output signal on the terminal 43 will reproduce the input signal in the input terminal 40, but when the counter has counted to the identification code, the OR gate 42 causes the output terminal 43 to go to high level. When such a circuit is contained in the marking element 47 shown in fig. 7, the position in the A-B matrix and the identification code of the element can be detected very easily by means of the schematically shown circuits comprising a plurality of output gates A1, A2 .... and a plurality of two-way communication gates B1, B2 .. In this manner, the position A5, B3 of the marking element 47 can be detected when the A5 gate is connected to the input terminal 40, while the gate B3 is connected to the output terminal 43 on the circuit from fig. 6. It is noted that the position can be detected already after the first few signal changes on input and output when the input terminal 40 has received a plurality of input pulses corresponding to the associated identification code.

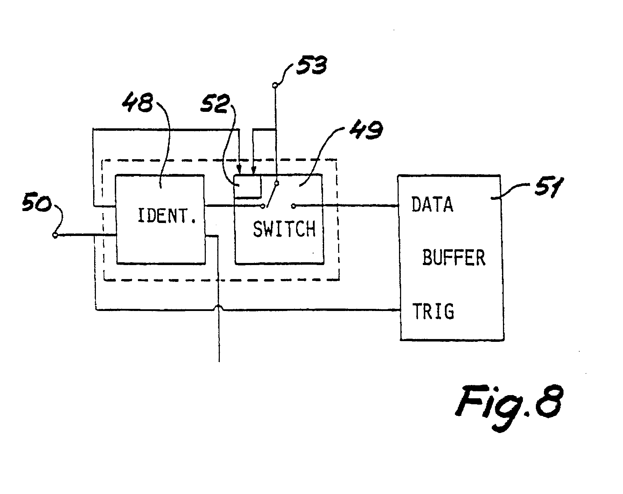

With reference to fig. 8, it will now be explained how information may be transferred from the board to a more complicated circuit for a marking element. The circuit comprises an identification circuit 48 of the type shown in fig. 6, an electronic switch 49, an input terminal 50, a buffer circuit 51, and a logic circuit 52 contained in the switch circuit 49. The circuit 52 is responsive to the signal levels on the input and output terminals 50 and 53, respectively, so that the output terminal 53 can be switched between the identification circuit 48 and the buffer circuit 51, respectively, in response to predetermined combinations of signal changes on the terminals 50 and 53. The control circuit coupled to the board is so arranged that upon detection of a circuit of the type shown in fig. 8, it can automatically switch over to control the electronic switch 49 and to transfer data to the buffer circuit 51, so that e.g. information can be displayed on a liquid crystal display.

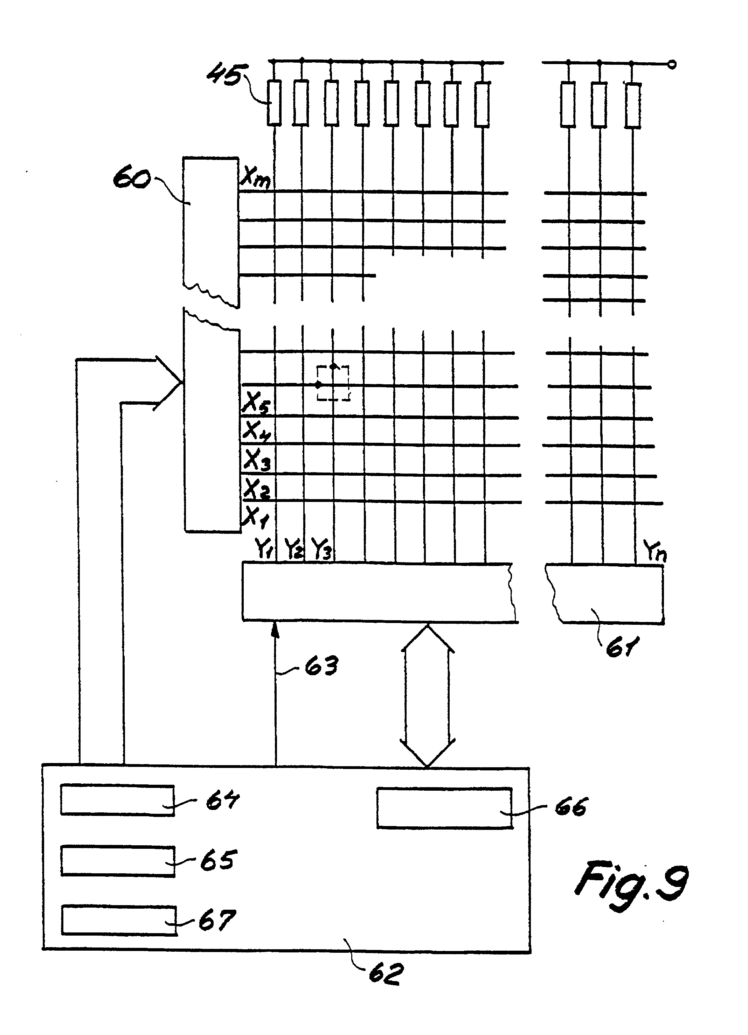

With reference to fig. 9, the electronic circuits con nected to the board will now be explained in more detail, and following this, some preferred uses and embodiments of the electronic board of the invention will be explained. It will appear from this that the effective art of the invention for scanning the many locations of the board and for detecting an identification code involves surprising possibilities of using the electronic board.

Fig. 9 is an expansion of fig. 7 and comprises an output circuit 60, a two-way transmission circuit 61, said circuits being connected to a board control circuit 62 and to the shown matrix X1 .. XM, Y1 ..YN. When comparing with the circuit of fig. 6, it will be appreciated that the input terminals of the identification circuit receive signals from the output circuit 60, while the output terminal of the identification circuit is coupled to the circuit 61, cf. also the resistors 45. The board control circuit 62 is adapted to transfer data and to control the signal direction for the circuit 61. Below, the mode of operation of said circuits will be described more fully.

Initially in a scanning cycle, all rows from No. 1 to No. M are forced to high level by the board control circuit 62 via the circuit 60. Then the first bit in the circuit 61 connected to the first column on the board changes from high to low level. This entails that all marking elements placed on column No. 1 will be loaded, cf. the explanation in connection with fig. 6.

Then column No. 1 is scanned for applied marking elements, which is established in that the gate in the circuit 61 connected to the first column is inverted from being an output gate to being an input gate by means of the control line 63. Then a plurality of pulses monitored by a counter circuit 63 is transmitted on the first output of the circuit 60, while another counter circuit 65 detects that the pulses are transmitted on the first output of the circuit 60. As explained before, the identification circuit is so arranged that the presence of a circuit in position X1, Y1 entails that the first gate on the circuit 61 will immediately reflect the input signal which is transmitted on the first row from the circuit 60. Conversely, if this does not happen immediately, this indicates that a marking element is not placed in position X1, Y1, and the counter 65 is counted one step forwardly, and the process is repeated for X2, etc. until XM. Then it has been detected that no marking elements were placed in the first column Y1.

Then a shift is made to column Y2 simultaneously with an additional counter 66 being counted forwardly, and the process continues until the position X5, Y3, where it now will turn out that the output signal received by the third gate on the circuit 61 now follows the input signals transmitted from the fifth output of the circuit 60 and monitored by the counter 64. The position of the element appears from the counters 65 and 66. As explained before, the output of the identification code follows the input signal until a plurality of pulses has been received, corresponding to the identification code of the element, and once this situation occurs, the counter 64 contains a figure which indicates the identification code of the element. This process continues until all matrix points in the board have been scanned.

The board control circuit preferably comprises an electronic store 67 which is adapted to store the result of a whole scanning cycle with respect to the position of the elements as well as their identification code. This has the advantage that the next cycle can be restricted to monitor the position of all the marking elements and just to detect the identification code for such marking elements as do not have the same position as in the preceeding scanning. This results in a considerable increase in the scanning rate, but entails that variants explained later, where the identification code in a position can be changed, cannot be used. It may therefore be advantageous to divide the board and the control circuit 62 into respective sections, so that some areas of the board have a very high scanning rate but restricted flexibility, while other sections can handle quite special situations.

The circuit in fig. 9 can also be used for transmitting information to a marking element as the control circuit 62 may have received the information e.g. from a data processing system, cf. fig. 1. More particularly, this takes place in that, after detection of a circuit of the type shown in fig. 8, coded signals are transmitted from the circuits 60 and 61 to switch the electronic switches in the marking element. Then data are transmitted via the circuit 61 simultaneously with transmission of clock pulses from the circuit 60, so that the drive circuit 51 receives the information synchronously. When data have been transferred, at new coded message is transmitted from the circuits 60 and 61 so that the electronic switch 48 returns to the initial position.

After the above general explanation of the mode of operation of the components for the electronic board, the possibilities and thus the value of e.g. the examples described below in connection with figs. 10-12 will readily be understood.

Fig. 10 represents an embodiment and a use where the primary purpose is to convert the information appearing from an ordinary board into electronic detectable information, which can e.g. be processed by a data system. Fig. 10 can e.g. represent a duty hours plan, e.g. at a hospital where the individual wards are marked by means of marking elements 70, 71. The week days are represented by marking elements, such as 72, 73, while the hours are represented by marking elements 74. As appears from fig. 10, employee "P" works from 8 a.m. to 4 p.m, employee "S" from 0 a.m. to 8 a.m. In case of illness, change of duty, holiday substitutes, particularly busy periods, etc., such a board can advantageously be used for immediately representing the situation visually. Through the means described in the foregoing the visual information can be converted into electronic information, which can be processed by a data system, e.g. for calculating salary and overtime payment, for flex-time supervision or for producing information serving purposes of survey or statistics. Other uses may be e.g. arrangement of timetables for schools, etc.

The functions explained in connection with fig. 10 may be expanded additionally by means of the board of invention. For example, the marking elements may contain a switch which is operated by the individual employee and which when actuated changes the identification code of the marking element so that the data system is now informed that the employee is present. This may additionally be marked by lighting a light diode in the individual marking element. The light diode might also be caused e.g. to flash in various situations, so that the board may e.g. also serve as an intercommunication system and generally involves great advantages beyond ordinarily known planning uses, c.f. the examples below.

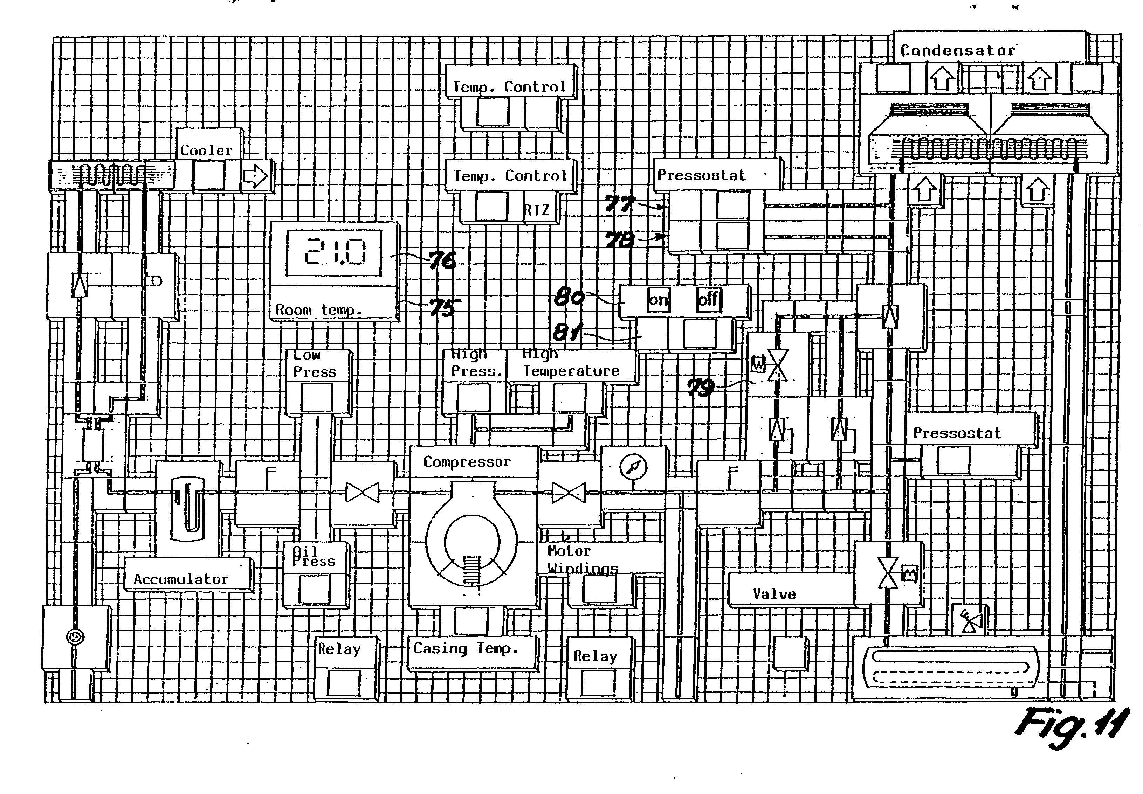

Fig. 11 represents a use of the board of the invention where the board is used for visualizing electronic information, the scanning and identification technique of the invention being used for improving process simulation systems of the type where the calculations are primarily performed in the data processing system connected to the board. The marking elements may comprise a plurality of electrically passive elements whose upper side is provided with a symbol for a component in an industrial process. Fig. 11 is intended to represent a diagram of an air conditioning system which comprises air-cooled condensators, ceiling coolers, a compressor, various valves and control equipment. Both in normal operation and during running-in phases it is a great help if the state can be monitored at various locations in such a system, which can be obtained by means of the electronic board of the invention.

The marking element 75 may be passive, while the marking element 76 comprises a display for display of a room temperature. The board can "find" the marking element on the basis of its identification code, as explained above. Fig. 11 shows a plurality of examples of other indicators, such as pressostats 77,78 etc. The board can particularly be used in a design phase of such a system where it is desired to find the effect of alternative configurations, it being possible to connect the board to a data system with a simulation program for the entire process. If e.g. it is desired to register the effect of switching of a magnet valve 79, a marking element 80 with push-buttons may be placed in the vicinity of it, causing the identification code of the element to be changed, which informs the simulation program of whether the magnet valve 79 is open or closed. The state may be registered by means of a marking element 81 serving as an indicator.

With reference to fig. 11 it will also be understood that if the marking elements symbolizing the system and mentioned before as electrically passive, are changed to have an identification code defining their function, it is possible to indicate a change in the structure of the system to the data system by moving about the signatures, and then the system registers the position of the individual component with respect to the other components.

A corresponding technique may conceivably also be used for designing a data program, using marking elements with the signature for various logic operations.

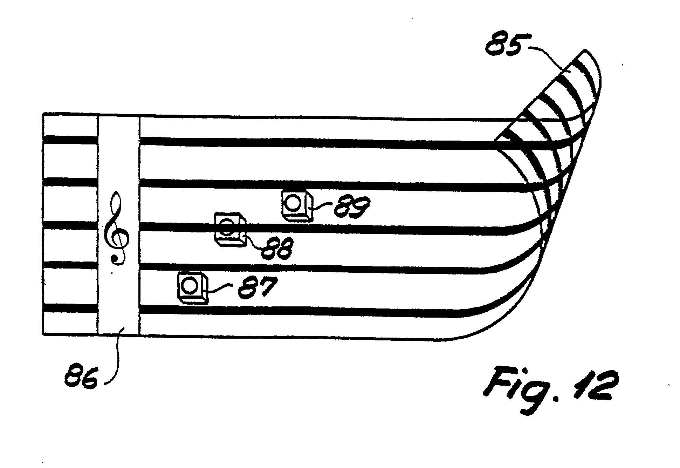

Fig. 12 shows an additional example of the versatility of the board of the invention. For clarity, the individual coupling studs are not shown, while the figure shows a sheet 85 with holes (not shown) in a pattern corresponding to the coupling studs, so that the sheet may be placed on the board and represent note lines. When a marking element 86, e.g. with a treble clef, is placed correctly with respect to the sheet 86, the data system may receive information on which notes are represented by the marking elements 87-89. It will be appreciated that there are marking elements for various note values, several treble and bas clefs for indicating several voices, and when the data system is coupled to a tone generator, the melody represented by the marking elements may be played. The marking elements may additionally represent various instruments so that the invention may be used for composition purposes or reproduction of difficult passages.

Conclusively, the electronic board of the invention may be considered a new medium between a data processing system and a user, said medium being considerably more flexible than e.g. a screen display in connection with the purposes described above.

**Claims**

1. An electronic board, e.g. a planning board, comprising a plurality of different marking elements adapted to be positioned on the board and comprising electric components which can be detected by detecting means, placed in the board, via cooperating contact areas on the board and the marking elements, respectively, **characterized** in that the board has rows and columns of mechanical coupling means corresponding to a uniform modular measure, and that the marking elements have coupling means, complementary to the said coupling means, for positioning of the elements in various positions on the board and comprise electronic circuits containing at least information of an identification code, and that a plurality of contact areas in the board, disposed in the same row and on the same column, respectively, are interconnected to a respective terminal on an X and a Y circuit, respectively.

2. A board according to claim ·1, **characterized** in that the mechanical coupling means comprise coupling studs projecting from the surface of the board and disposed with mutual modular distances, said coupling studs being provided with the electric contact areas, and that the underside of the marking elements has cavities provided with said complementary electric contact areas to receive coupling studs and to provide electric contact.

3. A board according to claim 1 or 2, **characterized** in that the marking elements comprise means to display electric information.

4. A board according to claim 1, 2 or 3, **characterized** by marking elements, each of which having at least two different identification codes and having means to activate one of the identification codes at a time.

5. A board according to any of the preceding claims, **characterized** in that a marking element is a certain number of modules greater than a base element, and that the identification code comprises information on the size of the marking element with respect to the base element.

6. A board according to claim 1, **characterized** in that the board is composed of a plurality of adjacent board units.

7. A board according to claim 1 or 6, **characterized** in that the board is preprinted with a predetermined pattern.

8. A board according to claim 1, 6, or 7, **characterized** by a sheet which is preprinted with a predetermined pattern and is adapted to be positioned on the board.

9. A board according to claim 1, **characterized** in that one of the X and Y circuits comprises output gates, the other comprising gates for two-way transmission, and that all the gates are connected to a board control circuit comprising counting means for performing a scanning cycle for position and identification determination of all marking elements on the board.

10. A board according to claim 9, **characterized** in that the board control circuit has an electronic store of sufficient capacity to store the result of a scanning cycle.

*Fig.1*

0 259 873

Fig.2

0 259 873

Fig.3

Fig.4

*Fig.5*

Fig. 6

Fig. 7

*Fig.8*

Fig.9

| | mandag | | | | | | tirsdag | | | | | |
|---|---|---|---|---|---|---|---|---|---|---|---|---|
| | kl. 00–04 | kl. 04–08 | kl. 08–12 | kl. 12–16 | kl. 16–20 | kl. 20–24 | kl. 00–04 | kl. 04–08 | kl. 08–12 | kl. 12–16 | kl. 16–20 | kl. 20–24 |

Fig. 10

0 259 873

Fig.11

0 259 873

Fig. 12